# EUROPEAN PATENT APPLICATION

(11) **EP 4 464 541 A1**
(43) Date of publication of application: **20.11.2024**
(21) Application number: 22920705.5
(22) Date of filing: 13.01.2022
(51) Int. Cl.: B60L 53/18, B60L 53/60, H02G 11/02

(54) **CHARGING APPARATUS AND METHOD COMPRISING CABLE**

(71) Applicant: LG Electronics Inc., Yeongdeungpo-gu Seoul 07336 (KR)
(72) Inventor: KIM, Hongseok, Seoul 06772 (KR); YOON, Sangwon, Seoul 06772 (KR); LEE, Seungdon, Seoul 06772 (KR)
(74) Representative: Vossius & Partner Patentanwälte Rechtsanwälte mbB
(86) International application number: PCT/KR2022/000609
(87) International publication number: WO 2023/136372

(57) **Abstract**

In embodiments, there is provided a charging device with a cable. The charging device with the cable includes: a cable wheel connected to one end of the cable by a connecting portion; and a driver configured to rotate the cable wheel such that at least a portion of the cable winds around the cable wheel and prevent entanglement of the cable caused by the rotation.

## Description

### TECHNICAL FIELD

Embodiments relate to a charging device with a cable and a charging method. For example, the embodiments are applied to an electric vehicle charging device with a cable.

### BACKGROUND

Recently, there has been a growing interest in electric vehicles with increasing concerns about the environment. The electric vehicle is powered by electricity. In other words, the electric vehicle uses electricity to obtain propulsion energy, rather than burning fossil fuels such as gasoline or diesel.

The electric vehicles utilize the electricity stored in their onboard or external batteries as a power source. In this case, the batteries that provide power to the electric vehicles are secondary batteries, which are capable of being recharged and used again even after discharging.

To charge the batteries of the electric vehicles, electric vehicle chargers are required. Typically, the electric vehicle chargers include fast chargers and slow chargers, depending on the charging speed.

The electric vehicle charger utilizes a cable to transfer electrical energy from the electric vehicle charger to the electric vehicle. Such a cable is designed to accommodate the distance between the electric vehicle charger and the charging port of the electric vehicle, resulting in a longer length. However, when charging is not in progress, the cable may not be conveniently stored in a separate location and remain outside the charger. This may lead to issues such as cable damage or environmental contamination caused by the cable.

In particular, for fast chargers, since the cables thereof are expensive and thick, the aforementioned issues are exacerbated.

### DISCLOSURE

### TECHNICAL PROBLEM

Embodiments are to provide a charging device and charging method for solving the above-described issues.

Embodiments are to solve the problem of difficult cable mounting in the charging device with the cable and charging method.

It will be appreciated by persons skilled in the art that the objects that could be achieved with the embodiments are not limited to what has been particularly described hereinabove and the above and other objects that the present disclosure could achieve will be more clearly understood from the following detailed description.

### TECHNICAL SOLUTION

In an aspect of the present disclosure, there is provided a charging device with a cable. The charging device includes: a cable wheel connected to one end of the cable by a connecting portion; and a driver configured to rotate the cable wheel such that at least a portion of the cable winds around the cable wheel and prevent entanglement of the cable caused by the rotation.

According to embodiments, the driver is configured to rotate the cable wheel such that the cable winds around the cable wheel by less than 360 degrees.

According to embodiments, the charging device further includes: an opening through which the cable passes; and a cable guide configured to guide movement of the cable through the opening.

According to embodiments, the cable guide includes a wheel configured to guide the cable in at least a portion of the opening.

According to embodiments, the charging device further includes a wheel stopper fixed inside the charging device and configured to limit a radius of the rotation of the cable wheel such that the cable wheel rotates within a predetermined angle.

According to embodiments, the wheel stopper is provided at a position separated by a predetermined distance from a point through which a circumference of the cable wheel passes, and the predetermined distance is less than a thickness of the connecting portion.

According to embodiments, the predetermined angle is more than or equal to 180 degrees and less than 360 degrees.

According to embodiments, the cable includes a cable contact portion on another end.

The charging device further includes: a processor; and a sensor configured to detect a position of the cable contact portion. The processor is configured to control the driver and the sensor.

According to embodiments, based on that the sensor detects that the cable contact portion is inside the charging device, the processor is configured to rotate the driver in a first direction. The first direction is a direction in which at least a portion of the cable winds around the cable wheel.

According to embodiments, based on that the sensor detects that the cable contact portion is outside the charging device, the processor is configured to rotate the driver in a second direction. The second direction is a direction in which at least a portion of the cable unwinds from the cable wheel.

According to embodiments, the sensor includes an image sensor and a distance sensor. Based on that the sensor detects that the cable contact portion is outside the charging device, the processor is configured to: obtain an image of a charging target from the image sensor; calculate a distance to the charging target based on the distance sensor; and control the driver to unwind the cable from the cable wheel based on the calculated distance.

According to embodiments, the processor is configured to: based on that the sensor detects that the cable contact portion is outside the charging device, rotate the driver in a second direction by a first angle; and based on that the sensor detects a tensile force on the cable, rotate the driver in the second direction by a second angle.

According to embodiments, the driver is provided on a same plane as the cable wheel. The driver is in contact with at least a portion of the cable wheel and configured to rotate in an opposite direction to the cable wheel.

According to embodiments, the cable includes a first cable and a second cable. The cable wheel includes a first cable wheel connected to one end of the first cable and a second cable wheel connected to one end of the second cable. The first cable and the second cable are provided at upper and lower portions of the charging device, respectively.

According to embodiments, the charging device further includes a waterproof cover configured to cover the cable wheel.

In another aspect of the present disclosure, a charging method is provided. The charging method includes: detecting, by a sensor, a position of a cable contact portion based on sensing a change in the position of the cable contact portion; driving, by a processor, a cable wheel in a first direction through a driver based on the cable contact portion is inside a charging device; and driving, by the processor, the cable wheel in a second direction through the driver based on the cable contact portion is outside the charging device.

### ADVANTAGEOUS EFFECTS

According to embodiments, cables may be automatically aligned in accordance with a charging device with a cable and charging method.

According to embodiments, cables may be mounted in accordance with the charging device with the cable and charging method.

According to embodiments, cables may be withdrawn or stored in accordance with the charging device with the cable and charging method.

According to embodiments, cables may be prevented from being damaged in accordance with the charging device with the cable and charging method.

According to embodiments, it is possible to prevent cables from contaminating surrounding environments and prevent the cables from being contaminated in accordance with the charging device with the cable and charging method.

### BRIEF DESCRIPTION OF THE DRAWINGS

The accompanying drawings, which are included to provide better understanding of various embodiments, illustrate the embodiments and together with the description serve to explain the principle of the embodiments.
FIG. 1 is a block diagram of a charging device according to embodiments.
FIG. 2 is a schematic structural view of a charging device according to embodiments.
FIG. 3 is a schematic structural view of a charging device according to embodiments.
FIG. 4 is a schematic structural view of a sensor according to embodiments.
FIG. 5 is a schematic structural view of a driver according to embodiments.
FIG. 6 is a schematic structural view of a cable wheel according to embodiments.
FIG. 7 is a schematic structural view of a cable wheel according to embodiments.
FIG. 8 is a schematic structural view of a cable guide according to embodiments.
FIG. 9 is a schematic structural view of a wheel stopper according to embodiments.
FIG. 10 is a flowchart of a charging method according to embodiments.
FIG. 11 shows an example in which embodiments are applied during charging or discharging.

### DETAILED DESCRIPTION

Hereinafter, embodiments of the present disclosure will be described in detail with reference to the attached drawings. In this specification, the same or equivalent components will be provided with the same reference numbers, and description thereof will not be repeated. The suffixes "unit," "module," "chamber," and "part" for the components herein are assigned or used interchangeably for the convenience of writing this specification, and they do not inherently imply distinct meanings or roles. The suffixes "unit," "module," "chamber," and "part" for the components in the following description are assigned for convenience of description. Thus, the suffixes may be used interchangeably and do not inherently imply distinct meanings or roles.

If detailed explanations of the related prior art are deemed to obscure the essence of the embodiment disclosed in this specification, the detailed explanations will be omitted. The attached drawings are merely to provide better understanding of the embodiments of the present disclosure, and the technical spirit of the present disclosure is not limited to the attached drawings. Thus, it should be understood that the scope of the present disclosure includes all modifications, equivalents, and substitutions in addition to those within the scope of the inventive concept and technical scope of the present disclosure.

While ordinal terms such as "first," "second," and so on may be used to describe various components, such components are not be limited by the terms. The above terms are used only to distinguish one component from another. When a component is mentioned to be "connected" or "attached" to another component, it should be understood that the component may be directly connected or attached to the other component, but there may also be other components between the two components.

On the other hand, when a component is mentioned to be "directly connected" or "directly attached" to another component, it should be understood that there are no other components between the two components. The singular forms are intended to include the plural forms as well unless the context clearly indicates otherwise. It should be understood that terms such as "including" or "having" are intended to specify the presence of the features, numbers, steps, operations, components, parts, or combinations thereof disclosed in the specification, without excluding the presence or possibility of one or more additional features, numbers, steps, operations, components, parts, or combinations thereof.

The charging device described in embodiments is a device for charging batteries. The charging device supplies voltage to batteries that are discharged or partially discharged to allow the batteries to store electrical energy.

The battery described in embodiments is a device that convert energy released through a chemical reaction into electrical energy. In this case, the battery is, for example, a secondary battery. The battery discharges by supplying electrical energy to electronic devices, for example. In addition, the battery is charged by receiving electrical energy from the charging device. In this way, the battery is capable of discharging and/or being charged at least twice. For example, the electronic devices include vehicles, mobile phones, and so on.

In this specification, the terms "vehicle," "electric vehicle," and "electric car" may be used interchangeably and refer to devices that use electrical energy as their power source.

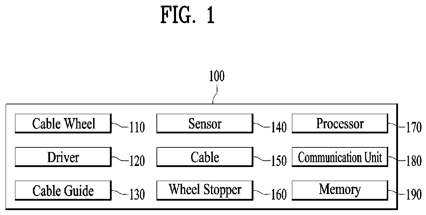

FIG. 1 is a block diagram of a charging device according to embodiments.

The charging device 100 according to the embodiments includes a cable wheel 110, a driver 120, a cable guide 130, and a cable 150. In addition, the charging device 100 may further include at least one of a sensor 140 and a wheel stopper 160. Furthermore, the charging device 100 may also include at least one of a processor 170, a communication unit 180, and a memory 190.

The charging device 100 according to the embodiments charges batteries. The charging device 100 supplies voltage to a battery that is discharged or partially discharged to allow the battery to store electrical energy.

The cable 150 is coiled around the cable wheel 110 according to embodiments. The cable 150 is at least partially coiled around the cable wheel 110.

The driver 120 according to embodiments drives the cable wheel 110 such that the cable 150 is coiled around the cable wheel 110.

The cable guide 130 according to embodiments guides the movement direction of the cable 150.

The sensor 140 according to embodiments includes one or more sensors to sense at least one of information on the inside of the charging device 100, the outside of the charging device 100, or the surrounding environment of the charging device 100 and user information.

For example, the sensor 140 includes at least one of a proximity sensor, illumination sensor, touch sensor, acceleration sensor, magnetic sensor, gravity sensor (G-sensor), gyroscope sensor, motion sensor, red-green-blue (RGB) sensor, infrared (IR) sensor, finger scan sensor, ultrasonic sensor, microphone, battery gauge, environmental sensor (e.g., barometer, humidity sensor, thermometer, radiation detection sensor, thermal detection sensor, gas detection sensor, etc.), and chemical sensor (e.g., electronic nose, healthcare sensor, biometric sensor, etc.).

The charging device 100 may combine and utilize information sensed by at least two or more of these sensors.

The sensor 140 also detects the state of the cable 150. The sensor 140 detects, for example, the movement of the cable 150 to determine whether the cable 150 is inside or outside the charging device 100.

The cable 150 according to embodiments transfers voltage or current. The cable 150 supplies electrical energy from the charging device 100 to a battery. In other words, the cable 150 is directly or indirectly connected to the battery to transfer electrical energy from the charging device 100 to the battery.

The wheel stopper 160 according to embodiments limits the radius of the rotation of the cable wheel 110 such that the cable wheel 110 rotates within a predetermined angle.

The processor 170 according to embodiments controls all or some components included in the charging device 100. The processor 170 is located within the charging device 100 and controls the overall operation of the charging device 100. However, the processor 170 may be located outside the charging device 100 and control the charging device 100 through the communication unit 180.

The communication unit 180 according to embodiments transmits and receives data with an external device wirelessly or by wire. In this case, the external device is a device that is being charged or intended to be charged by the charging device 100. For example, the external device may be a vehicle. Alternatively, the external device may be a multimedia device used by the user of the charging device 100 such as a laptop or smartphone.

The communication unit 180 includes at least one of a broadcast receiving module, mobile communication module, wireless Internet module, short-range communication module, and location information module.

The broadcast receiving module according to embodiments receives broadcast signals and/or broadcast-related information from an external broadcast management server over a broadcast channel. The broadcast channel includes a satellite channel and a terrestrial channel. The mobile terminal 100 are equipped with two or more broadcast receiving modules for simultaneous broadcast reception or broadcast channel switching between two or more broadcast channels.

The mobile communication module according to embodiments transmits and receives wireless signals with at least one of a base station, an external terminal, and a server on a mobile communication network. The mobile communication network is established according to technical standards or communication methods for mobile communication (e.g., Global System for Mobile Communication (GSM), Code Division Multi Access (CDMA), Code Division Multi Access 2000 (CDMA2000), Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), Long Term Evolution (LTE), Long Term Evolution-Advanced (LTE-A), etc.).

The wireless signals include various forms of data depending on transmission of voice signals, video call signals, or text/multimedia messages.

The wireless Internet module according to embodiments refers to a module for wireless Internet access. The wireless Internet module is integrated or externally attached to the charging device 100. The wireless Internet module is configured to transmit and receive wireless signals in communication networks based on wireless internet technologies.

The Wireless Internet technologies include, for example, Wireless Local Area Network (Wireless LAN or WLAN), Wireless Fidelity (Wi-Fi), Wi-Fi Direct, Digital Living Network Alliance (DLNA) Wireless Broadband (WiBro), World Interoperability for Microwave Access (WiMAX), HSDPA, HSUPA, LTE, LTE-A, and so on.

The wireless Internet module transmits and receives data according to one or more wireless Internet technologies including other Internet technologies not listed above.

Considering that wireless Internet access based on WiBro, HSDPA, HSUPA, GSM, CDMA, WCDMA, LTE, LTE-A, etc. is established on a mobile communication network, the wireless Internet module that performs the wireless Internet access on the mobile communication network may also be understood as a kind of mobile communication module.

The short-range communication module according to embodiments is designed for short-range communication. The short-range communication module may support short-range communication using at least one of the following technologies: Bluetooth^{™}, Radio Frequency Identification (RFID), Infrared Communication (Infrared Data Association (IrDA)), UWB Ultra-Wideband (UWB), ZigBee, Near Field Communication (NFC), Wi-Fi, Wi-Fi Direct, and Wireless Universal Serial Bus (Wireless USB).

The short-range communication module may support wireless communication between the charging device 100 and wireless communication systems, wireless communication between the charging devices 100 and other charging devices, or wireless communication between the charging device 100 and external devices over wireless area networks. The wireless area networks may be wireless personal area networks.

The memory 190 according to embodiments stores multiple application programs (or applications) executed by the charging device 100, as well as data and instructions for operating the charging device 100. Some of the application programs are downloaded from external servers via wireless communication. Additionally, at least some of the application programs are installed on the charging device 100 at the manufacturing stage to support its core functionalities (e.g., electrical energy transfer).

In general, the application programs are stored in the memory 160 and installed on the charging device 100 such that the application programs are executed by the processor 170 to perform operations (or functionalities) of the charging device.

Although not shown in the drawing, the charging device 100 may include a power supply unit. The power supply unit provides power to the charging device 100 from external natural or artificial sources. For example, the power supply unit may harness power from natural sources such as solar energy or wind power to supply power to the charging device 100. Alternatively, the power supply unit may receive power from artificial sources such as an external power supply device to supply power to the charging device 100.

The power supply unit receives power from external or internal sources and supplies power to each component included in the charging device 100. The power supply unit may include a battery, which may be an integrated or replaceable battery.

Hereinafter, the charging device 100 including all or some of the components will be described in detail.

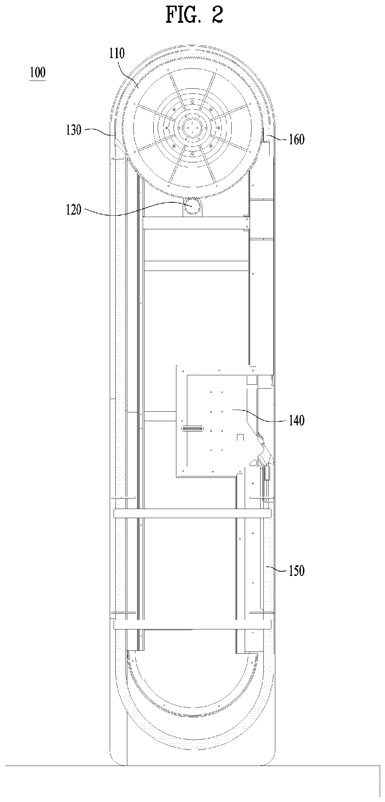

FIG. 2 is a schematic structural view of a charging device according to embodiments.

The charging device 100 according to the embodiments may store all or part of the cable 150 inside the charging device 100. To this end, the charging device 100 includes the cable wheel 110, driver 120, cable guide 130, sensor 140, cable 150, and wheel stopper 160. However, FIG. 2 is merely an example, and the charging device 100 may include only some of the components of FIG. 2.

The cable 160 is coiled around the cable wheel 110 according to embodiments. The cable wheel 110 is connected to one end of the cable 150. The cable wheel 110 is rotatable and has a circular shape.

Specifically, when the cable wheel 110 rotates in a first direction, the cable 150 connected to the cable wheel 110 is coiled along the circumference of the cable wheel 110. In addition, when the cable wheel 110 rotates in a second direction, the cable 150 connected to the cable wheel 110 is uncoiled along the circumference of the cable wheel 110. The first direction and the second direction are opposite to each other. For example, if the first direction is clockwise, the second direction is counterclockwise.

The driver 120 according to embodiments rotates the cable wheel 110. The driver 120 enables the cable 150 to be ejected from or retracted into the charging device 100 by rotating the cable wheel 110. In this case, the driver 120 rotates the cable wheel 110 by considering a tensile force depending on the thickness of the cable 150. Alternatively, the driver 120 rotates the cable wheel 110 by considering a tensile force depending on the weight of the cable 150. The tensile force exerted by the cable 150 is proportional to the driving force applied by the driver 120 to rotate the cable wheel 110.

For example, the driver 120 rotates the cable wheel 110 in the first direction such that the cable 150 is coiled along the circumference of the cable wheel 110. In this case, at least a portion of the cable 150 is stored within the charging device 120. The driver 120 rotates the cable wheel 110 to prevent entanglement of the cable 150, which may be caused by the rotation. For example, the driver 120 ensures that the cable 150 is coiled around the cable wheel 110 by less than 360 degrees to prevent the entanglement of the cable 150. Alternatively, the driver 120 rotates the cable wheel 110 to ensure that the cable 150 is coiled around the cable wheel 110 by more than 180 degrees but less than 360 degrees, thus preventing the entanglement of the cable 150. For example, the driver 120 rotates the cable wheel 110 such that the cable 150 is coiled around the cable wheel 110 by less than 360 degrees, thus preventing the entanglement of the cable 150. Alternatively, the driver 120 rotates the cable wheel 110 such that the cable 150 is coiled around the cable wheel 110 by more than 180 degrees but less than 360 degrees, thus preventing the entanglement of the cable 150.

By doing so, the charging device 100 prevents accidents such as fires caused by the entanglement of the cable 150.

Alternatively, for example, the driver 120 rotates the cable wheel 110 in the second direction such that the cable 150 is uncoiled along the circumference of the cable wheel 110. In this case, at least a portion of the cable 150 extends outside the charging device 120.

For example, when charging through the cable 150 is required, the driver 120 rotates the cable wheel 110 in the second direction to extend the cable 150. In addition, when charging through the cable 150 is completed, the driver 120 rotates the cable wheel 110 in the first direction to retract the cable 150 for storage.

By doing so, the length of the cable 150 stored in and withdrawn from the charging device 100 may increase. In addition, the charging device 100 enables the storage of the cable 150, thereby promoting safety and preventing damage. For example, the charging device 100 may safely store, hold, and withdraw the cable 150 with a length of about 700 mm or longer.

The cable guide 130 according to embodiments guides the cable 150. The cable guide 130 prevents the cable 150 from departing from a predetermined path when the cable 150 is extended or retracted. Alternatively, the cable guide 130 prevents entanglement of the cable 150. Further, the cable guide 130 supports or fixes the cable 150 such that the cable 150 is located at a predetermined position.

The charging device 100 includes one or more cable guides 130. The cable guide 130 may serve as the wheel stopper 160.

The sensor 140 according to the embodiment detects the state of the cable 150. For example, the sensor 140 detects whether the cable 150 is inside or outside the charging device 100. Specifically, the sensor 140 detects the position of a cable contact portion (not shown) where the cable 150 is in contact with a battery. For example, the sensor 140 detects whether the cable contact portion is inserted into the charging device 100 or withdrawn to the outside of the charging device 100.

The driver 120 rotates the cable wheel 110 based on the position of the cable contact portion detected by the sensor 140.

When the sensor 140 detects that the position of the cable contact portion is outside the charging device 100, the driver 120 rotates the cable wheel 110 in the second direction such that the cable 150 is uncoiled along the circumference of the cable wheel 110. For example, when the user withdraws the cable contact portion from the charging device 100 to use the cable 150, the driver 120 rotates the cable wheel 110 such that the cable 150 extends outside the charging device 100 for convenient charging.

In this case, if the position of the cable contact portion is detected to be outside the charging device 100, the driver 120 rotates the cable wheel 110 by a first angle. If the second 140 detects a tensile force on the cable 150 after the cable wheel 110 rotates by the first angle, the driver 120 further rotates the cable wheel 110 by a second angle. The first angle and the second angle may be the same or different.

As described above, the driver 120 adjusts the angle at which the cable wheel 110 rotates at one time to extend the cable 150 outside the charging device 100 only as much as needed for charging. Accordingly, the charging device 100 controls the extension of the cable 150 to prevent damage to the cable 150 or contamination of the surrounding environment by the cable 150.

When the sensor 140 detects that the position of the cable contact portion is inside the charging device 100, the driver 120 rotates the cable wheel 110 in the first direction such that the cable 150 is coiled along the circumference of the cable wheel 110. For example, when the user mounts the cable contact portion on the charging device 100 to end the use of the cable 150, the driver 120 rotates the cable wheel 110 such that the cable 150 is retracted into the charging device 100 to assist in the alignment or arrangement of the cable 150.

The cable 150 according to embodiments transfers electrical energy from the charging device 100 to a battery.

As described above, one end of the cable 150 is connected to the cable contact portion. The cable contact portion refers to a place in direct or indirect contact with the battery, and the cable 150 is connected to the battery through the cable contact portion.

The other end of the cable 150 is connected to the cable wheel 110. In this case, the other end of the cable 150 is fixed to the cable wheel 110 to receive electrical energy from the charging device 100. In other words, the other end of the cable 150 is physically connected to the cable wheel 110 and electrically connected to the charging device 100 at the same time. For example, the cable 150 may transfer power ranging from 100 to 350 kW, which allows the cable 150 to facilitate fast charging of batteries.

The wheel stopper 160 according to embodiments limits the maximum radius of movement of the cable wheel 110. The wheel stopper 160 is fixed at a predetermined position inside the charging device 100. The predetermined position inside the charging device 100 is a portion of the radius of the cable wheel 110, that is, a point through which the circumference of cable wheel 110 passes.

The cable wheel 110 may include a hook portion (not shown) at a predetermined position around the cable wheel 110 such that the maximum radius of movement is limited by the wheel stopper 160. The hook portion may be a point on the circumference of the cable wheel 110 where the cable 150 is not coiled. In this case, the cable 150 is not coiled around the entire circumference of the cable wheel 110. By doing so, the charging device 100 prevents accidents such as fires caused by entanglement of the cable 150, for example.

The wheel stopper 160 restricts the rotation of the cable wheel 110 within a predetermined angle. For example, the wheel stopper 160 limits the rotation of the cable wheel 110 such that the cable 150 is coiled around the cable wheel 110 by less than 360 degrees. In another example, the wheel stopper 160 limits the rotation of the cable wheel 110 such that the cable 150 is coiled around the cable wheel 110 by more than 180 degrees but less than 360 degrees.

On the other hand, the charging device 100 has a waterproof exterior. Alternatively, the charging device 100 includes a waterproof cover that covers the cable wheel 110. Additionally, the charging device 100 may have an upper portion with a circular shape corresponding to the shape of the cable wheel 110. Accordingly, the charging device 100 prevents any damage to the entirety or parts thereof caused by external elements such as rain or snow.

As described above, the charging device 100 enhances stability by performing primary prevention by the driver 120 and secondary prevention by the cable wheel 110 to avoid entanglement of the cable 150.

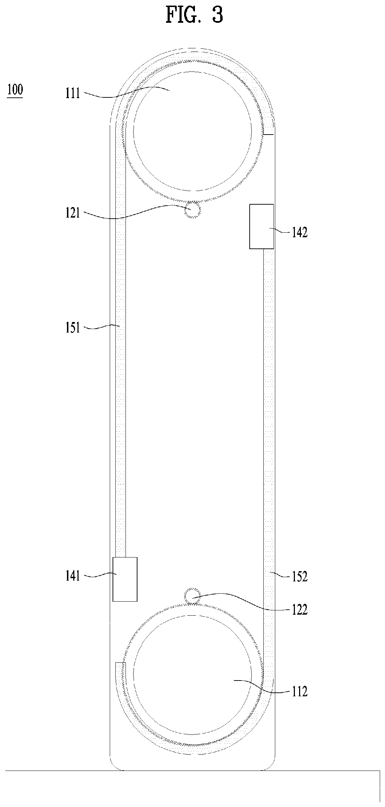

FIG. 3 is a schematic structural view of a charging device according to embodiments.

The charging device 100 shown in FIG. 3 is an example including two cables 150. The charging device 100 shown in FIG. 3 includes the same or similar components as the charging device 100 described with reference to FIG. 2.

The charging device 100 includes one or more cable wheels (for example, the cable wheel described in FIG. 2), one or more drivers (for example, the driver described in FIG. 2), and one or more cables (for example, the cable described in FIG. 2). In addition, the charging device 100 includes one or more sensors (for example, the sensor described in FIG. 2).

The cables include, for example, a first cable 151 and a second cable 152. The cable wheels include, for example, a first cable wheel 111 and a second cable wheel 112. The drivers include, for example, a first driver 121 and a second driver 122. The sensors include, for example, a first sensor 141 and a second sensor 142.

The first cable 151 is coiled along the circumference of the first cable wheel 111. The first driver 121 rotates the first cable wheel 111. The first sensor 141 detects the position of the first cable 151.

If it is detected that a first cable contact portion included in the first cable 151 is outside the charging device 100, the first driver 121 rotates the first cable wheel 111 in the second direction such that the first cable 151 extends outside the charging device 100.

The second cable 152 is coiled along the circumference of the second cable wheel 112. The second driver 122 rotates the second cable wheel 112. The second sensor 142 detects the position of the second cable 152.

If it is detected that a second cable contact portion included in the second cable 152 is outside the charging device 100, the second driver 122 rotates the second cable wheel 112 in the second direction such that the second cable 152 extends outside the charging device 100.

The first cable 151 and the second cable 152 may be ejected simultaneously from the charging device 100 to the outside, or the first cable 151 and the second cable 152 may be simultaneously retracted into the charging device 100 for storage.

Although not shown in the drawing, the charging device 100 may include one cable 150 and related components for each of the front and rear sides. That is, the charging device 100 may include the one cable 150 for each side and transfer electrical energy to two batteries at the same time.

In addition, the charging device 100 may include two cables 150 and related components for each of the front and rear sides. That is, the charging device 100 may include the two cables 150 for each side and transfer electrical energy to four batteries at the same time.

In this case, the number of cable wheels is greater than or equal to the number of cables. The number of drivers is equal to the number of cable wheels. Similarly, the number of sensors is equal to the number of cables. This means that one cable is capable of being coiled around two or more cable wheels, and in this case, the one cable wheel is at least partially coiled around each of the two or more cable wheels.

Hereinafter, each component included in the charging device 100 will be described in detail.

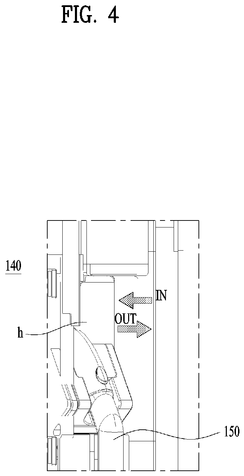

FIG. 4 is a schematic structural view of a sensor according to embodiments.

As described above, the sensor 140 according to the embodiments detects the position of the cable 150. Specifically, the sensor 140 detects the position of the cable contact portion. For example, the sensor 140 detects whether the cable contact portion is in an IN state or an OUT state with respect to the charging device 100. As described above, the driver 120 drives the cable wheel 110 according to the detection result of the sensor 140.

The sensor 140 is provided within the charging device 100. Specifically, the sensor 140 is provided in a mounting portion h of the charging device 100 where the cable contact portion is mounted. Accordingly, the sensor 140 detects whether the cable contact portion is mounted on the mounting portion h.

Alternatively, the sensor 140 is disposed on the cable contact portion. Specifically, the sensor 140 is disposed on the exterior of the cable contact portion. Accordingly, the sensor 140 detects whether the cable 150 is separated from the mounting portion h.

The sensor 140 includes, for example, a vision camera and/or a distance sensor. In this case, the sensor 140 detects not only the position of the cable contact portion but also the position of a battery. However, this is merely an example, and the sensor 140 may include any sensor capable of obtaining information on a distance or image.

For example, the sensor 140 acquires an images of the position of the battery from the vision camera. The processor 170 compares the image acquired by the sensor 140 with an image pre-stored in the memory 190 to determine whether the acquired image corresponds to a target to be charged by the charging device 100. When the processor 170 determines that the acquired image corresponds to the target to be charged by the charging device 100, the processor 170 calculates the distance from the charging device 100 to the charging target. The processor 170 controls the driver 120 to rotate the cable wheel 110 such that the cable 150 extends outside the charging device 100 as much as the distance from the charging device 100 to the charging target.

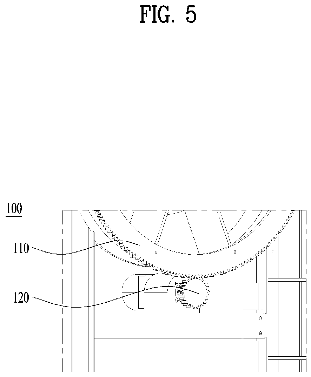

FIG. 5 is a schematic structural view of a driver according to embodiments.

As described above, the driver 120 according to embodiment drives the cable wheel 110. Specifically, the driver 120 rotates the cable wheel 110 in the first direction or the second direction. The driver 120 rotates the cable wheel 110 in consideration of the ejection or retraction speed of the cable 150.

As shown in FIG. 5, the driver 120 is provided on the same plane as the cable wheel 110. The driver 120 is disposed at a position in contact with a portion of the circumference of the cable wheel 110. To rotate the cable wheel 110, the driver 120 is designed such that the driver 120 is engaged with the cable wheel 110.

For example, the surface along the circumference of the driver 120 and the surface along the circumference of the cable wheel 110 are in a meshing relationship with each other. In this case, for example, when the driver 120 rotates in the first direction, the cable wheel 110 rotates in the second direction. Accordingly, the volume of the charging device 100 is minimized. The driver 120 has strong control over the cable wheel 110.

In this case, the driver 120 has the same circular shape as the cable wheel 110. Specifically, the driver 120 has a size proportional to the cable wheel 110 and the same shape as the cable wheel 110.

In this way, the length of the coiled cable 150 may increase by increasing the size of the cable wheel 110 and reducing the size of the driver 120.

However, the driver 120 may be positioned at the center of the cable wheel 110, unlike that shown in FIG. 5. In other words, the driver 120 may be located at the center of the circle formed by the cable wheel 110.

In this case, for example, when the driver 120 rotates in the first direction, the cable wheel 110 also rotates in the first direction. Thus, the driver 120 may drive the cable wheel 110 with less force.

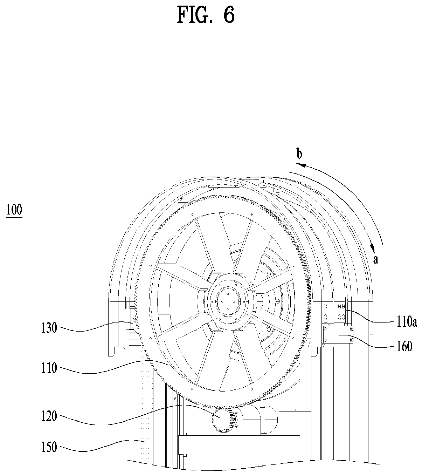

FIG. 6 is a schematic structural view of a cable wheel according to embodiments.

The cable 150 is coiled around the cable wheel 110 according to the embodiments. The cable wheel 110 is physically connected to one end of the cable 150 by the connecting portion 110a. In other words, the cable 150 is fixed to the cable wheel 110 by the connecting portion 110a. The connecting portion 110a may also serve as the hook portion described above in FIG. 2.

As described above, the cable 150 is coiled around the cable wheel 110 in either the first direction a or the second direction b under the control of the driver 120.

The first direction a refers to a direction in which the cable 150 is coiled along the circumference of the cable wheel 110, that is, a direction in which the cable 150 is retracted into the charging device 100 for storage. In addition, the first direction a refers to a direction in which the connecting portion 110a approaches the wheel stopper 160. When the cable wheel 110 rotates in the first direction a, the connecting portion 110a is caught by the wheel stopper 160 and thus, the rotation is braked. In other words, the wheel stopper 160 allows the cable wheel 110 to rotate only within a predetermined angle. In addition, the wheel stopper 160 prevents excessive rotation of the cable wheel 110, thus preventing entanglement of the cable 150.

The second direction b refers to a direction in which the cable 150 is uncoiled along the circumference of the cable wheel 110, that is, a direction in which the cable 150 extends from the charging device 100. In addition, the second direction b refers to a direction in which the connecting portion 110a moves away from the wheel stopper 160. In this case, the wheel stopper 160 does not prevent the cable 150 from being uncoiled from the cable wheel 110.

The cable wheel 110 includes an engaging portion designed to be engaged with the driver 120 and a coiling portion where the cable 150 is coiled. The engaging portion has a shape corresponding to the shape of the circumference of the driver 120. For example, the engaging portion may have a serrated shape. The coiling portion has a shape such that the cable 150 is not damaged. For example, the engaging portion has a smooth surface.

The cable wheel 110 has a circular shape with a radius more than or equal to a predetermined radius. In this case, the predetermined radius is the radius of curvature of the cable wheel 110, and the predetermined radius is determined based on the tensile force caused by the thickness of the coiled cable 150.

The cable wheel 110 has a thickness more than or equal to that of the cable 150, which provides stability to the cable wheel 110 against the tensile force caused by the thickness or weight of the cable 150.

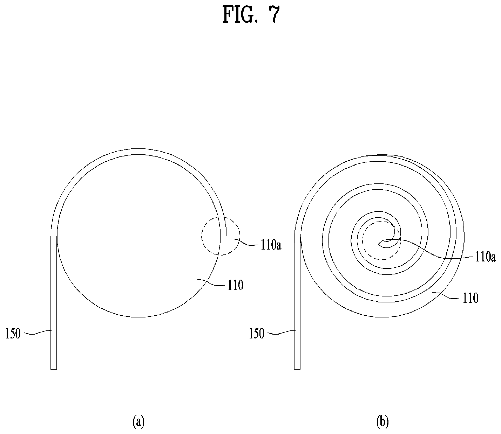

FIG. 7 is a schematic structural view of a cable wheel according to embodiments.

As shown in FIG. 7, the cable 150 is coiled around the cable wheel 110.

FIG. 7(a) shows a structure in which one end of the cable 150 is connected to a point on the circumference of the cable wheel 110. In this case, the connecting portion 110a is disposed at the point on the circumference of the cable wheel 110 to connect the cable 150 and the cable wheel 110.

In this case, as described above, the cable 150 is not entangled due to the rotation. In addition, the cable wheel 110 is controlled by a dual structure consisting of the driver 120 and the wheel stopper 160. Accordingly, the charging device 100 provides a solution for retracting the cable 150 into the charging device 100 with high stability and safety.

Furthermore, as the size of the cable wheel 110 decreases, the volume of the charging device 100 decreases.

FIG. 7(b) shows a structure in which one end of the cable 150 is connected to the center of the circle of the cable wheel 110. In this case, the connecting portion 110a is disposed at the center of the circle of the cable wheel 110 to connect the cable 150 and the cable wheel 110. The cable wheel 110 is made of a material that is not interfered by the magnetic field caused by the cable 150

In this case, the length of the cable 150 coiled around the cable wheel 110 may increase compared to FIG. 7(a). Therefore, the charging device 100 may easily supply electrical energy to a battery at a longer distance.

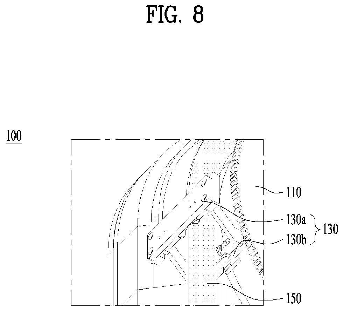

FIG. 8 is a schematic structural view of a cable guide according to embodiments.

The cable guide 130 according to the embodiments guides coiling of the cable 150 around the cable wheel 110 or uncoiling of the cable 150 from the cable wheel 110. The cable guide 130 fixes positions where the cable 150 is ejected or retracted. For example, the cable guide 130 includes a hole and guides the cable 150 to move into the hole. That is, the cable guide 130 prevents the cable 150 from deviating from the positions where the cable 150 is ejected or retracted, thereby preventing damage to the cable 150.

The charging device 100 includes one or more cable guides 130. That is, the charging device 100 may guide the movement path of the cable 150 in detail based on a plurality of cable guides 130.

The cable guide 130 includes, for example, an upper bearing 130a and a lower bearing 130b. The upper bearing 130a and the lower bearing 130b are coupled to form a single hole.

The upper bearing 130a may include a groove. The upper bearing 130a guides the moving direction of the cable 150 in detail. The lower bearing 130b may include a groove. The lower bearing 130b supports the cable 150 while guiding the moving direction of the cable 150 in detail.

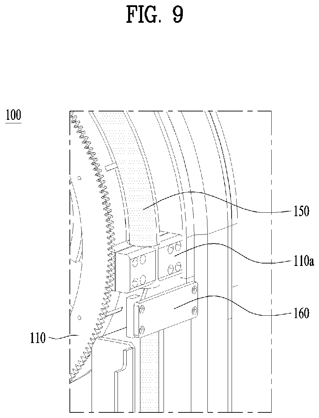

FIG. 9 is a schematic structural view of a wheel stopper according to embodiments.

As described above, the wheel stopper 160 according to the embodiments limits the radius of the rotation of the cable wheel 110.

The wheel stopper 160 allows the cable wheel 110 to rotate only within a predetermined angle. The predetermined angle refers to the maximum angle for the connecting portion 110a to move from a first point to a second point. The first point is a point where the cable 150 is connected to the cable wheel 110 but not coiled around the cable wheel 110. The second point is a point where the cable 150 is connected to the cable wheel 110 and coiled as much as possible along the circumference of the cable wheel 110.

The wheel stopper 160 is provided inside the charging device 100 at a position corresponding to the second point. Specifically, the wheel stopper 160 is provided at a position separated by a predetermined distance from a point where the circumference of the cable wheel 110 passes. The predetermined distance is less than the thickness of the hook portion described in FIG. 2. If the connecting portion 110a serves as the hook portion, the predetermined distance is less than the thickness of the connecting portion 110a.

The predetermined angle is, for example, more than or equal to 180 degrees. This allows the charging device 100 to store the cable 150 within the charging device 100 even if the cable 150 has a longer length. However, as shown in FIG. 5, if the driver 120 is positioned at the center of the lower part of the cable wheel 110, the predetermined angle may be, for example, less than 270 degrees. Thus, even if the length of the cable 150 increases, the charging device 100 may store the cable 150 within the charging device 100 without obstructing the operation of the driver 120. Alternatively, the predetermined angle may be, for example, less than 360 degrees. This allows the charging device 100 to store the cable 150 within the charging device 100 even if the length of the cable 150 increases further.

FIG. 9 shows only the wheel stopper 160 related to the direction in which the cable 150 is coiled around the cable wheel 110. However, the wheel stopper 160 may also be positioned in the direction in which the cable 150 is uncoiled from the cable wheel 110. For example, the wheel stopper 160 is positioned inside the charging device 100 at a position corresponding to the first point.

For example, when the cable 150 is uncoiled, the coupling force between the cable wheel 110 and the cable 150 may weaken due to the tensile force. If the wheel stopper 160 is installed in the direction where the cable 150 is coiled around the cable wheel 110, it prevents the occurrence of such issues.

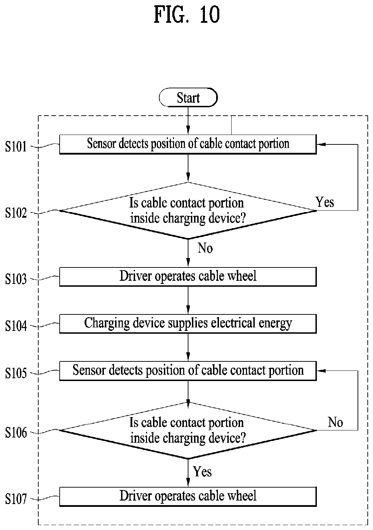

FIG. 10 is a flowchart of a charging method according to embodiments.

The charging method according to the embodiments includes a step (S101) where the sensor 140 detects the position of the cable contact portion. In this case, the cable 150 is coiled around the cable wheel 110 and stored within the charging device 100. Therefore, when the cable 150 is outside the charging device 100, the rotation direction of the cable wheel 110 is reversed in the following steps.

The charging method according to the embodiments includes a step (S102) where the processor 170 determines whether the position of the cable contact portion, which is detected by the sensor 140, is inside or outside the charging device 100. In this case, if the processor 170 determines that the position of the cable contact portion is inside the charging device 100, the charging method performs step S101 again (IN). On the other hand, if the processor 170 determines that the position of the cable contact portion is outside the charging device 100, the charging method performs step S103 (OUT).

The charging method according to the embodiments includes a step (S103) where the driver 120 operates the cable wheel 110. The driver 120 rotates the cable wheel 110 in the second direction such that the cable 150 is uncoiled from the cable wheel 110. In other words, the driver 120 enables the cable 150 to be ejected from the charging device 100.

The charging method according to the embodiments includes a step (S104) where the charging device 100 supplies electrical energy to a battery through the cable 150. For example, the charging device 100 is connected to a vehicle including a battery to be charged through the cable 150 and supplies electrical energy to the vehicle.

The charging method according to the embodiments includes a step (s105) where the sensor 140 detects the position of the cable contact portion.

The charging method according to the embodiments includes a step (s106) where the processor 170 determines whether the position of the cable contact portion, which is detected by the sensor 140, is inside or outside the charging device 100. In this case, if the processor 170 determines that the position of the cable contact portion is outside the charging device 100, the charging method performs step S105 again (IN). On the other hand, if the processor 170 determines that the position of the cable contact portion is inside the charging device 100, the charging method performs step S107 (OUT).

The charging method according to the embodiments includes a step (s107) where the driver 120 operates the cable wheel 110. The driver 120 rotates the cable wheel 110 in the first direction such that the cable 150 is coiled around the cable wheel 110. In other words, the driver 120 enables the cable 150 to be retracted into the charging device 100 for storage.

According to embodiments, steps S101 to S107 may be repeatedly executed (S108).

The charging method according to the embodiments provides a solution for storing or ejecting a cable during charging without causing any damage the cable.

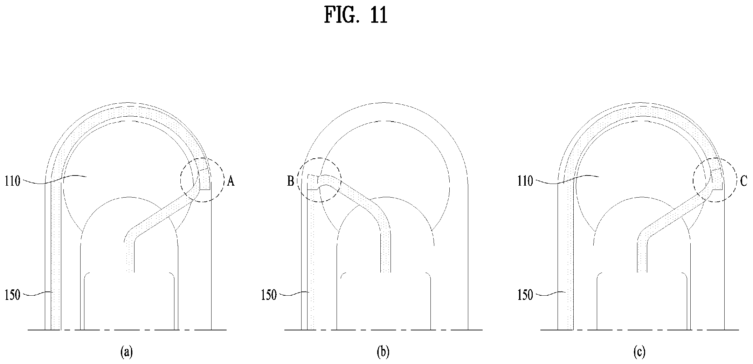

FIG. 11 shows an example in which embodiments are applied during charging or discharging.

Specifically, FIG. 11 shows the inside of the charging device 100 to illustrate the state of the cable 150 during charging or discharging.

FIG. 11(a) shows a charging standby state.

The charging standby state refers to a state in which no battery is being charged by the charging device 100. Therefore, in the charging standby state, at least a portion of the cable 150 is coiled along the circumference of the cable wheel 110. In this case, A corresponds to the second point described in FIG. 9. In other words, FIG. 11(a) shows the state where the cable 150 is fully coiled around the cable wheel 110 at the maximum angle.

FIG. 11(b) shows a state in which a user is recognized or a state in which a battery is being charged.

User recognition is performed by the communication unit or sensor mentioned in FIG. 1. For example, the user recognition may be performed by the communication unit in communication with an external device. Alternatively, the user recognition may be performed by a touch sensor located outside the charging device 100. When the user recognition is completed, the user may withdraw the cable contact portion from the charging device 100.

The sensor 140 detects the position of the cable contact portion. When it is detected that the position of the cable contact portion is outside the charging device 100, the charging device 100 rotates the cable wheel 110 to eject the cable 150 to the outside of the charging device 100. In this case, B corresponds to the first point described in FIG. 9. In other words, FIG. 11(b) shows the state where the cable 150 is uncoiled to the maximum extent from the cable wheel 110.

FIG. 11(c) shows a charging completion state and the charging standby state.

The charging completion state refers to a state where the charging device 100 completes transferring electrical energy to the battery. The charging device 100 recognizes the charging completion state when the sensor 140 detects that the position of the cable contact portion is inside the charging device 100. In this case, the driver 140 uncoils the cable 150 by rotating the cable wheel 110 to retract the cable 150 into the charging device 100 for storage. For example, C corresponds to the second point described in FIG. 9. In other words, FIG. 11(c) shows the state where the cable 150 is coiled around the cable wheel 110 at the maximum angle.

The charging device with the cable and charging method according to embodiments provide solutions to the following issues: damage caused by difficulty in mounting the cable, contamination of the surrounding environment, and contamination of the cable, by introducing a structure or method of storing a cable within a charging device based on rotation. The embodiments provide a solution for storing a cable in a charging device reliably even when the cable has a thickness from 32 mm to 38 mm for high-speed charging.

The charging device and charging method according to embodiments of the present disclosure have been described as specific embodiments. However, the embodiments are merely exemplary, and thus the present disclosure is not limited thereto. In other words, the scope of the present disclosure should be interpreted to encompass the broadest range consistent with the principles disclosed in this specification.

The skilled person may implement unmentioned embodiments by combining or substituting the embodiments disclosed herein. However, such variations are still within the scope of the present disclosure. In addition, it is apparent that the skilled person may easily modify or adapt the embodiments disclosed in this specification, and the modifications or adaptations are also within the scope of the present disclosure.

### INDUSTRIAL APPLICABILITY

The embodiments of the present disclosure are industrially applicable.

## Claims

1. A charging device with a cable comprising:
a cable wheel connected to one end of the cable by a connecting portion; and
a driver configured to rotate the cable wheel such that at least a portion of the cable winds around the cable wheel and prevent entanglement of the cable caused by the rotation.

2. The charging device with the cable of claim 1, wherein the driver is configured to rotate the cable wheel such that the cable winds around the cable wheel by less than 360 degrees.

3. The charging device with the cable of claim 1, further comprising:
an opening through which the cable passes; and
a cable guide configured to guide movement of the cable through the opening.

4. The charging device with the cable of claim 3, wherein the cable guide comprises a wheel configured to guide the cable in at least a portion of the opening.

5. The charging device with the cable of claim 1, further comprising a wheel stopper fixed inside the charging device and configured to limit a radius of the rotation of the cable wheel such that the cable wheel rotates within a predetermined angle.

6. The charging device with the cable of claim 5, wherein the wheel stopper is provided at a position separated by a predetermined distance from a point through which a circumference of the cable wheel passes, and
wherein the predetermined distance is less than a thickness of the connecting portion.

7. The charging device with the cable of claim 5, where the predetermined angle is more than or equal to 180 degrees and less than 360 degrees.

8. The charging device with the cable of claim 1, wherein the cable comprises a cable contact portion on another end,
wherein the charging device further comprises:
a processor; and
a sensor configured to detect a position of the cable contact portion, and
wherein the processor is configured to control the driver and the sensor.

9. The charging device with the cable of claim 8, wherein based on that the sensor detects that the cable contact portion is inside the charging device, the processor is configured to rotate the driver in a first direction, and
wherein the first direction is a direction in which at least a portion of the cable winds around the cable wheel.

10. The charging device with the cable of claim 8, wherein based on that the sensor detects that the cable contact portion is outside the charging device, the processor is configured to rotate the driver in a second direction, and
wherein the second direction is a direction in which at least a portion of the cable unwinds from the cable wheel.

11. The charging device with the cable of claim 8, wherein the sensor comprises an image sensor and a distance sensor, and
wherein based on that the sensor detects that the cable contact portion is outside the charging device, the processor is configured to:
obtain an image of a charging target from the image sensor;
calculate a distance to the charging target based on the distance sensor; and
control the driver to unwind the cable from the cable wheel based on the calculated distance.

12. The charging device with the cable of claim 8, wherein the processor is configured to:
based on that the sensor detects that the cable contact portion is outside the charging device, rotate the driver in a second direction by a first angle; and
based on that the sensor detects a tensile force on the cable, rotate the driver in the second direction by a second angle.

13. The charging device with the cable of claim 1, wherein the driver is provided on a same plane as the cable wheel, and
wherein the driver is in contact with at least a portion of the cable wheel and configured to rotate in an opposite direction to the cable wheel.

14. The charging device with the cable of claim 1, wherein the cable comprises a first cable and a second cable,
wherein the cable wheel comprises a first cable wheel connected to one end of the first cable and a second cable wheel connected to one end of the second cable, and
wherein the first cable and the second cable are provided at upper and lower portions of the charging device, respectively.

15. The charging device with the cable of claim 1, further comprising a waterproof cover configured to cover the cable wheel.

16. A charging method comprising:
detecting, by a sensor, a position of a cable contact portion based on sensing a change in the position of the cable contact portion;
driving, by a processor, a cable wheel in a first direction through a driver based on the cable contact portion is inside a charging device; and
driving, by the processor, the cable wheel in a second direction through the driver based on the cable contact portion is outside the charging device.
